(19)

**Europäisches Patentamt**
**European Patent Office**
**Office européen des brevets**

(11) **EP 4 596 462 A1**

(12) **EUROPEAN PATENT APPLICATION**

(43) Date of publication:
**06.08.2025   Bulletin 2025/32**

(21) Application number: **25154621.4**

(22) Date of filing: **29.01.2025**

(51) International Patent Classification (IPC):
**B65G 37/00** *(2006.01)*    **B65G 47/90** *(2006.01)*
**B65G 54/02** *(2006.01)*    **B65B 43/46** *(2006.01)*
**B65B 43/52** *(2006.01)*

(52) Cooperative Patent Classification (CPC):
**B65G 47/907; B65G 37/005; B65G 47/905;**
B65B 43/46; B65B 43/52; B65G 54/02;
B65G 2201/0238

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **02.02.2024   JP 2024015124**

(71) Applicant: **Pacraft Co., Ltd.**
**Tokyo 108-0014 (JP)**

(72) Inventors:
• **Yamane, Noriyuki**
**Iwakuni-shi, Yamaguchi-ken (JP)**
• **Miyanishi, Yuka**
**Iwakuni-shi, Yamaguchi-ken (JP)**
• **Nakagawa, Koichi**
**Iwakuni-shi, Yamaguchi-ken (JP)**
• **Imakura, Nobuhiro**
**Iwakuni-shi, Yamaguchi-ken (JP)**

(74) Representative: **Grünecker Patent- und Rechtsanwälte**
**PartG mbB**
**Leopoldstraße 4**
**80802 München (DE)**

(54)   **CONTAINER PROCESSING APPARATUS AND CONTAINER PROCESSING METHOD**

(57)   A container processing apparatus includes: a plurality of holding transfer sets (22A) that move along a transfer track (Tr) and transfer an object (C) used for container processing; and a control unit (13) that controls movement of the plurality of holding transfer sets (22A), wherein: the transfer track includes a first transfer track section and a second transfer track section that is connected to the first transfer track section and has a curvature different from a curvature of the first transfer track section, and the control unit controls movement of adjacent holding transfer sets (22A) in such a manner that an interval between the adjacent holding transfer sets (22A) is adjusted according to size of the object and the curvature of the second transfer track section when the adjacent holding transfer sets (22A) move from the first transfer track section to the second transfer track section.

**FIG. 3**

**Description**

TECHNICAL FIELD

The present disclosure relates to a container processing apparatus and a container treatment method.

BACKGROUND ART

Japanese patent application publication 2018-172140 discloses a conveyance apparatus that conveys bag-shaped containers by utilizing a linear motor that includes an electromagnetic coil and a permanent magnet. In the conveyance apparatus of Japanese patent application publication 2018-172140, a gripper travels along an elliptical conveyance track while gripping a bag-shaped container. Each gripper in Japanese patent application publication 2018-172140 includes two sets of movable bodies, arms and gripping jaws, and these two sets form a pair to grip a bag-shaped container.

SUMMARY OF THE INVENTION

A plurality of holding transfer sets including carriers such as movable bodies, arms and holding units are provided, and the plurality of holding transfer sets move along a common transfer track while holding objects such as containers, enabling continuous transfer of a large number of objects. Respective items being transferred together with the plurality of holding transfer sets can also undergo any processing during transfer.

When a plurality of holding transfer sets move along a common transfer track in this manner, efficient and reliable transfer of a plurality of objects requires that the plurality of holding transfer sets be moved so that adjacent holding transfer sets maintain a desired spacing. In particular, the spacing between adjacent holding transfer sets tends to change when a plurality of holding transfer sets move along a track with varying curvature, such as when a plurality of holding transfer sets enter a curved track from a straight track or when a plurality of holding transfer sets enter a straight track from a curved track.

The present disclosure provides a technique advantageous for suppressing unintended spacing variations between adjacent holding transfer sets when a plurality of holding transfer sets are caused to move along a common transfer track.

An aspect of the present disclosure is directed to a container processing apparatus comprising: a plurality of holding transfer sets that move along a transfer track and transfer an object used for container processing; and a control unit that controls movement of the plurality of holding transfer sets, wherein: the transfer track includes a first transfer track section and a second transfer track section that is connected to the first transfer track section and has a curvature different from a curvature of the first transfer track section, and the control unit controls movement of adjacent holding transfer sets in such a manner that an interval between the adjacent holding transfer sets is adjusted according to size of the object and the curvature of the second transfer track section when the adjacent holding transfer sets move from the first transfer track section to the second transfer track section.

Each of the plurality of holding transfer sets may include a carrier, an arm protruding from the carrier, and a holding unit that is attached to the arm and is capable of holding the object, and the control unit may adjust the interval between the adjacent holding transfer sets in such a manner that the arms do not collide with each other between the adjacent holding transfer sets when the adjacent holding transfer sets move from the first transfer track section to the second transfer track section.

The arm of each of the plurality of holding transfer sets may protrude from the carrier in a direction approaching a center of a curvature circle of the second transfer track section while moving through the second transfer track section.

The control unit may control the movement of the plurality of holding transfer sets in such a manner that distance between the arms of the adjacent holding transfer sets in the first transfer track section immediately before the adjacent holding transfer sets enter the second transfer track section is greater than distance between the arms of the adjacent holding transfer sets immediately after the entire adjacent holding transfer sets enter the second transfer track section.

Each of the plurality of holding transfer sets may include a carrier, an arm protruding from the carrier, and a holding unit that is attached to the arm and is capable of holding the object, and the control unit may control the movement of the plurality of holding transfer sets in such a manner that distance between the holding units of the adjacent holding transfer sets is maintained constant when the adjacent holding transfer sets that hold the object move from the first transfer track section to the second transfer track section.

The control unit may control speed of the movement of the adjacent holding transfer sets to adjust the interval between the adjacent holding transfer sets when the adjacent holding transfer sets move from the first transfer track section to the second transfer track section.

At least one of an area of the first transfer track section immediately before the second transfer track section and an area of the second transfer track section immediately after the first transfer track section may be a buffer track section where speed of movement of one of the adjacent holding transfer sets is different from speed of movement of another of the adjacent holding transfer sets.

Another aspect of the present disclosure is directed to a container processing method comprising a step of causing a plurality of holding transfer sets that transfer an object used for container processing, to move along a transfer track, wherein: the transfer track includes a first transfer track section and a second transfer track section that is connected to the first transfer track section and has a curvature different from a curvature of the first transfer track section, and when adjacent holding transfer sets move from the first transfer track section to the second transfer track section, an interval between the adjacent holding transfer sets is adjusted according to size of the object and the curvature of the second transfer track section.

According to the technology of the present disclosure, it is advantageous to suppress unintended spacing variations between adjacent holding transfer sets when a plurality of holding transfer sets are caused to move along a common transfer track.

BRIEF DESCRIPTION OF DRAWINGS

Fig. 1 is a plan view showing a schematic configuration of an example of a container processing system;

Fig. 2 is an enlarged plan view showing an example of the movement control of holding transfer units (holding transfer sets) in a case of an outward-directed curved track;

Fig. 3 is an enlarged plan view showing an example of the movement control of holding transfer units (holding transfer sets) in a case of an inward-directed curved track;

Fig. 4 is an enlarged plan view showing an example of the movement control of holding transfer units (holding transfer sets) in the case of an inward-directed curved track;

Fig. 5A is a plan view showing a typical example of a transfer track;

Fig. 5B is a plan view showing a typical example of a transfer track;

Fig. 5C is a plan view showing a typical example of a transfer track;

Fig. 5D is a plan view showing a typical example of a transfer track;

Fig. 5E is a plan view showing a typical example of a transfer track;

Fig. 5F is a plan view showing a typical example of a transfer track;

Fig. 5G is a plan view showing a typical example of a transfer track;

Fig. 5H is a plan view showing a typical example of a transfer track;

Fig. 5I is a plan view showing a typical example of a transfer track;

Fig. 6A is a plan view showing an example of a holding transfer unit;

Fig. 6B is a plan view showing an example of a holding transfer unit;

Fig. 7A is a plan view showing an example of a holding transfer unit;

Fig. 7B is a plan view showing an example of a holding transfer unit;

Fig. 8A is a plan view showing an example of a holding transfer unit;

Fig. 8B is a plan view showing an example of a holding transfer unit; and

Fig. 9 is a side view showing an example of a holding transfer unit.

DETAILED DESCRIPTION

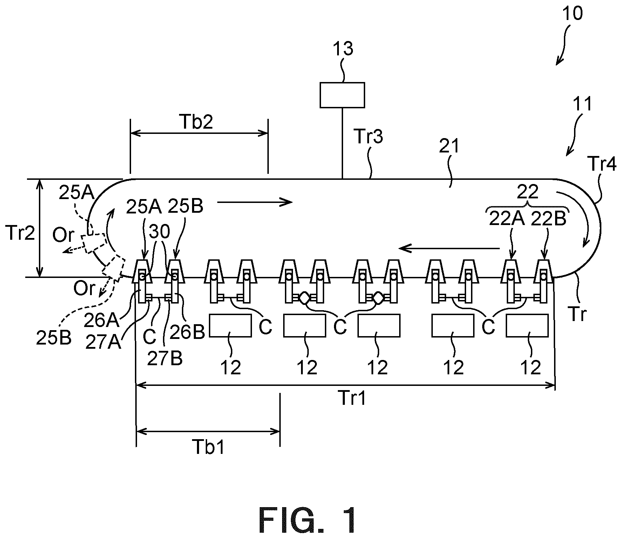

Fig. 1 is a plan view showing a schematic configuration of an example of a container processing system (a container processing apparatus) 10.

The container processing system 10 shown in Fig. 1 comprises a container transfer device 11, a plurality of processing devices 12, and a control device (control unit) 13.

The container transfer device 11 is supplied with bags (containers) C, conveys bags C along a transfer track (transfer path) Tr, and releases bags (product bags) C having received processing by the processing devices 12, toward the next stage.

The plurality of processing devices 12 perform various types of processing on bags C that are conveyed by the container transfer device 11 and/or on contents contained in the bags C. The specific processing details performed by the processing devices 12 are not limited, and each processing device 12 can perform any processing according to the purpose of the container processing system 10. As an example, a processing device 12 that gives new unprocessed bags (e.g., empty flat bags) C to the container transfer device 11 (in particular, holding transfer units 22) may be provided, a processing device 12 that performs printing on a bag C may be provided, a processing device 12 that introduces contents into a bag C through the mouth of the opened bag C may be provided, a processing device 12 that seals the mouth portion of a bag C may be provided, and/or a processing device 12 that sends bags C toward a subsequent stage may be provided.

In the container processing system 10 shown in Fig. 1, a plurality of processing devices 12 are provided along a straight first track Tr1 of the transfer track Tr, but one or more processing devices 12 may be provided along any other part of the transfer track Tr (for example, along a curved second track Tr2).

The container transfer device 11 comprises: a transfer device 21 controlled by the control device 13; and a plurality of holding transfer units 22 driven by the transfer device 21. The control device 13 controls the transfer device 21 to control the movement (operation) of each of the plurality of holding transfer units 22 (a plurality of holding transfer sets 22A, 22B).

The transfer device 21 gives power to each of the plurality of holding transfer units 22 under the control of the control device 13 to move each holding transfer unit 22 along the transfer track Tr. The transfer device 21 in the present example has a linear motor (not shown in the drawings) that uses magnetic force to give power to each of the holding transfer units 22. However, the transfer device 21 may have any other driving device, and a force other than magnetic force may be used as power to each holding transfer unit 22 to move.

In the example shown in Fig. 1, a transfer track Tr is set along the outer circumference of the body part of the transfer device 21, and each holding transfer unit 22 is moved along this endless transfer track Tr in a circulating manner. The transfer track Tr shown in Fig. 1 includes two straight tracks (see a first track Tr1 and a third track Tr3) and two curved (semicircular) tracks (see a second track Tr2 and a fourth track Tr4) that connect the ends of the two straight tracks with each other. In other words, the transfer track Tr shown in Fig. 1 includes the first track Tr1, the second track Tr2 that is connected to the first track Tr1 and has a different curvature from that of the first track Tr1, the third track Tr3 that is connected to the second track Tr2 and has a different curvature from that of the second track Tr2, and the fourth track Tr4 that is connected to the third track Tr3 and the first track Tr1 and has a curvature different from those of the third track Tr3 and the first track Tr1.

The transfer track Tr is not limited to the example shown in Fig. 1, but includes a plurality of tracks having mutually different curvatures, which includes a track having a relatively small curvature and a track having a relatively large curvature.

Each holding transfer unit 22 moving along the transfer track Tr includes a first holding transfer set 22A and a second holding transfer set 22B that form a pair and transfers an object (in the present example, a bag C) used for container processing.

The first holding transfer set 22A includes: a first carrier 25A that moves along the transfer track Tr; a first arm 26A attached to the first carrier 25A via a connecting shaft 30; and a first holding unit 27A installed on the first arm 26A. Similarly, the second holding transfer set 22B includes: a second carrier 25B that moves along the transfer track Tr; a second arm 26B attached to the second carrier 25B via a connecting shaft 30; and a second holding unit 27B installed on the second arm 26B.

In each of the holding transfer sets 22A, 22B, the arms 26A, 26B protrude horizontally from the corresponding carriers 25A, 25B, and the holding units 27A, 27B are attached to the protruding portions of the corresponding arms 26A, 26B and are provided for holding a bag C.

In Fig. 1, for a holding transfer unit 22 in the second track Tr2, only carriers 25A, 25B are shown with dotted lines and the indication of other components (e.g., arms 26A, 26B and holding units 27A, 27B) are omitted.

The first carrier 25A and the second carrier 25B move along the transfer track Tr as a result of receiving power (in the present example, magnetic force) from the transfer device 21. The first arm 26A and the first holding unit 27A move along the transfer track Tr together with the first carrier 25A, and the second arm 26B and the second holding unit 27B move along the transfer track Tr together with the second carrier 25B.

The transfer device 21 can stop the first carrier 25A (the first holding transfer set 22A) and the second carrier 25B (the second holding transfer set 22B) of each holding transfer unit 22 at any position on the transfer track Tr and can move the first carrier 25A (the first holding transfer set 22A) and the second carrier 25B (the second holding transfer set 22B) of each holding transfer unit 22 at any speed. In the example shown in Fig. 1, each holding transfer unit 22 is moved along the transfer track Tr in a fixed direction (a clockwise direction in Fig. 1), and the first holding transfer set 22A moves ahead of the second holding transfer set 22B. However, the direction of movement of each holding transfer unit 22 is not limited, and each holding transfer unit 22 may be made to move along the transfer track Tr in the opposite direction (a counterclockwise direction in Fig. 1) at any given time.

The first holding unit 27A and the second holding unit 27B are provided mainly for holding a bag (a container) C, and a bag C moves along the transfer track Tr together with a corresponding holding transfer unit 22 while being held by the first holding unit 27A and the second holding unit 27B. A first holding unit 27A and a second holding unit 27B in the present example are configured as a gripping unit that grips both sides of a bag C, and are driven by the transfer device 21 under the control of the control device 13 to be closed and open for gripping and releasing the bag C. The manner in which a bag C is held by a first holding unit 27A and a second holding unit 27B is not limited, and a first holding unit 27A and a second holding unit 27B may utilize means other than gripping (e.g., suction, or the like).

The interval between a first carrier 25A and a second carrier 25B forming a pair is adjusted by the transfer device 21 under the control of the control device 13, so that the interval between a corresponding first holding unit 27A and a corresponding second holding unit 27B is adjusted. By widening the distance between a first holding unit 27A and a second holding unit 27B that are gripping a bag C, it is possible to tense the bag C. On the other hand, by narrowing the distance between a first holding unit 27A and a second holding unit 27B that are gripping a bag C, it is possible to cause the bag C to undergo a deflection, and for example, to open the mouth portion of the bag C if the mouth portion, which is formed by the top part of the bag C, is not sealed.

In the container processing system 10 shown in Fig. 1 having the above-describe configuration, when each holding transfer unit 22 moves along the transfer track Tr, the orientation Or of the carriers 25A, 25B of each holding transfer unit 22 is made to be perpendicular to the transfer track Tr. Therefore, while each holding transfer unit 22 is moving along a straight track (see the first track Tr1), the first carrier 25A and the second carrier 25B of each holding transfer unit 22 are oriented in the same direction as each other. On the other hand, while at least one of the carriers 25A, 25B of each holding transfer unit 22 is moving on a curved track (see the second track Tr2), these carriers 25A, 25B are oriented in different directions from each other.

In each holding transfer unit 22 of the present embodiment, the first arm 26A and the first holding unit 27A are attached to the first carrier 25A not to rotate. Similarly, the second arm 26B and second holding unit 27B are attached to the second carrier 25B not to rotate.

Therefore, the orientation of a first holding unit (a first arm 26A and a first holding unit 27A) that moves along the transfer track Tr together with a first carrier 25A changes according to the orientation of a first carrier 25A, and in the present example, is the same as the orientation Or of the first carrier 25A. Similarly, the orientation of a second holding unit (a second arm 26B and a second holding unit 27B) that moves along the transfer track Tr together with a second carrier 25B changes according to the orientation of a second carrier 25B, and in the present example, is the same as the orientation Or of the second carrier 25B.

As described above, in the present embodiment, depending on the shape of the transfer track Tr, the orientations may be different between the first holding transfer set 22A (the first carrier 25A, the first arm 26A and the first holding unit 27A) and the orientation of the second holding transfer set 22B (the second carrier 25B, the second arm 26B and the second holding unit 27B) of each holding transfer unit 22. Further, the orientations of the holding transfer sets 22A, 22B may differ between adjacent holding transfer units 22.

Therefore, even if the distance between reference locations of the carriers 25A, 25B of each holding transfer unit 22 is maintained constant, the distance between the holding units 27A, 27B, which are provided at different locations from the reference locations of the carriers 25A, 25B, changes according to the orientations of the carriers 25A, 25B. Therefore, when each holding transfer unit 22 moves along a track that varies curvature, the distance between the holding units 27A, 27B may widen or narrow due to changes in the orientations of the carriers 25A, 25B even if the carriers 25A, 25B move at the same speed as each other.

For instance, when a holding transfer unit 22 progresses from a straight track to a curved track, there is concern that the interval between the holding units 27A, 27B that are gripping a bag C in a strained state widens, so that proper holding of the bag C by the holding units 27A, 27B cannot be maintained. Similarly, when a holding transfer unit 22 progresses from a curved track to a straight track, there is concern that the interval between the holding units 27A, 27B that are gripping a bag C narrows, so that proper holding of the bag C by the holding units 27A, 27B cannot be maintained.

Therefore, an embodiment that is advantageous for stably holding a bag C by means of holding transfer sets 22A, 22B (holding units 27A, 27B) even when the orientations of the holding transfer sets 22A, 22B may differ from each other, is illustrated by example below.

The control device 13 controls the transfer device 21 in such a manner that the movement of each holding transfer unit 22 having the configuration described above and the opening/closing of each holding unit 27A, 27B for gripping are controlled. In particular, the control device 13 of the present embodiment controls the power (in the present example, magnetic force) exerted from the transfer device 21 on each holding transfer unit 22 (in particular, the power action parts (not shown in the drawings) of the carriers 25A, 25B) in such a manner that the first holding transfer set 22A and the second holding transfer set 22B of each holding transfer unit 22 can be caused to move individually along the transfer track Tr.

Specifically, the control device 13 controls the position and the speed of the reference locations of the carriers 25A, 25B of each holding transfer unit 22 to position the holding transfer sets 22A, 22B of each holding transfer unit 22 at desired positions or move the holding transfer sets 22A, 22B of each holding transfer unit 22 at a desired speed, independently of each other or in sync with each other. As an example, each holding transfer unit 22 may be provided in such a manner that the location on a first carrier 25A where the first arm 26A is attached (a first arm attachment location; see the connecting shaft 30) and the location on the second carrier 25B where the second arm 26B is attached (a second arm attachment location; see the connecting shaft 30) move on the transfer track Tr as the reference locations of the carriers 25A, 25B.

However, the reference locations of carriers 25A, 25B are not limited to the first arm attachment location and the second arm attachment location, and the control device 13 may control the position and the speed of the first holding transfer set 22A and the second holding transfer set 22B of each holding transfer unit 22 based on other locations of the carriers 25A, 25B. Therefore, the position of the arm attachment locations of carriers 25A, 25B relative to the transfer track Tr is not limited. For example, in a plan view, the arm attachment locations of carriers 25A, 25B may be located on the holding units 27A, 27B side compared to the transfer track Tr, or may be located on the transfer track Tr or on the base ends side of the arms 26A, 26B (i.e., on the opposite side of the holding units 27A, 27B) compared to the transfer track Tr.

The control device 13 adjusts the distance between the reference locations of carriers 25A, 25B via the transfer device 21 to adjust the distance between the holding units 27A, 27B. In other words, the distance between the first holding unit 27A and the second holding unit 27B can change according to the distance between the reference location of the first carrier 25A (e.g., the first arm attachment location) and the reference location of the second carrier 25B (e.g., the second arm attachment location). Therefore, the distance between the first holding unit 27A and the second holding unit 27B can be adjusted by adjusting the distance between the reference location of the first carrier 25A and the reference location of the second carrier 25B.

In particular, according to a holding transfer unit 22 of the present embodiment, as a result of the interval between the reference location of the first carrier 25A and the reference location of the second carrier 25B being narrowed, the interval between the first holding unit 27A and the second holding unit 27B is narrowed. On the other hand, as a result of the interval between the reference location of the first carrier 25A and the reference location of the second carrier 25B widening, the interval between the first holding unit 27A and the second holding unit 27B widens.

However, the spacing between a first holding unit 27A and a second holding unit 27B is determined based not only on the spacing (distance) between the reference location of the first carrier 25A and the reference location of the second carrier 25B as described above, but also on the orientations of the first carrier 25A and the second carrier 25B (the holding transfer sets 22A, 22B).

The orientations of a first carrier 25A and a second carrier 25B (holding transfer sets 22A, 22B) are determined according to the shape (curvature) of the transfer track Tr. In particular, the control device 13 of the present embodiment cannot dynamically change the orientations of a first carrier 25A and a second carrier 25B (holding transfer sets 22A, 22B), independently of the shape (curvature) of the transfer track Tr. However, the control device 13 may be configured to be able to dynamically change the orientations of a first carrier 25A and a second carrier 25B (holding transfer sets 22A, 22B) via the transfer device 21, independently of the shape (curvature) of the transfer track Tr.

When adjacent holding transfer sets 22A, 22B move from a first transfer track section to a second transfer track section, the control device 13 of the present embodiment controls the movement of the adjacent holding transfer sets 22A, 22B in such a manner that the spacing between the adjacent holding transfer sets 22A, 22B is adjusted according to the size of a bag C (an object to be transferred by the holding transfer unit 22) and the curvature of the second transfer track section. Here, the first transfer track section on the upstream side and the second transfer track section on the downstream side are connected to each other and have different curvatures, but may be either a straight track (see the first track Tr1 and the third track Tr3) or a curved track (see the second track Tr2 and the fourth track Tr4).

When adjacent holding transfer sets 22A, 22B move from a straight track (having a curvature = 0) to a curved track (having a curvature ≠ 0), the arms 26A, 26B of the holding transfer sets 22A, 22B are oriented in the same direction as each other on the straight track, and thus basically no collision (interference) between the arms 26A, 26B occurs. Therefore, when the first transfer track section is a straight track, the curvature of the straight track (the first transfer track section) need not be considered in order to adjust the distance between adjacent holding transfer sets 22A, 22B. On the other hand, when adjacent holding transfer sets 22A, 22B move from a curved track (the first transfer track section) to another track (a straight track or a curved track: the second transfer track section), the control device 13 preferably controls the movement of the adjacent holding transfer sets 22A, 22B in such a manner that the distance between the adjacent holding transfer sets 22A, 22B is adjusted according to the size of a bag C, the curvature of the curved track (the first transfer track section) and the curvature of the other track (the second transfer track section) to avoid collision (interference) between the arms 26A, 26B on the curved track (the first transfer track section).

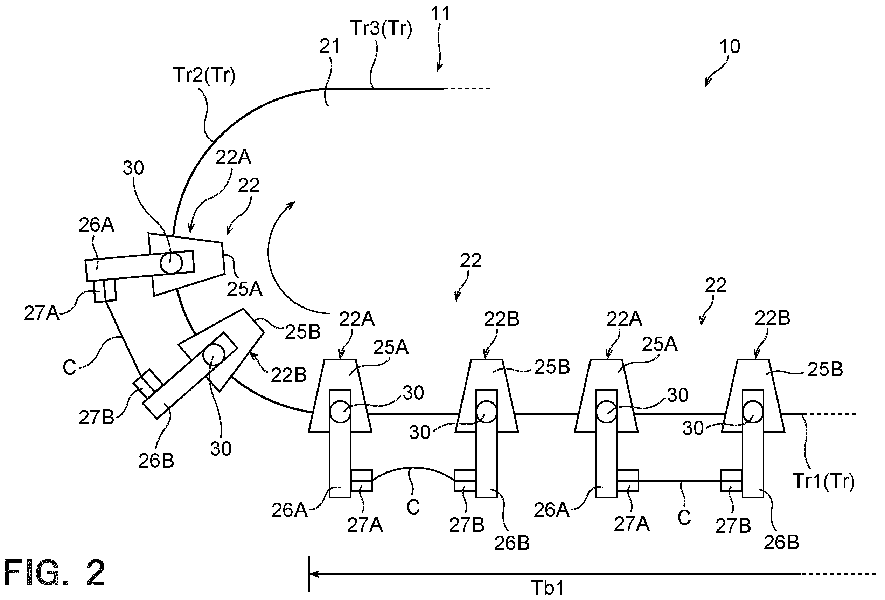

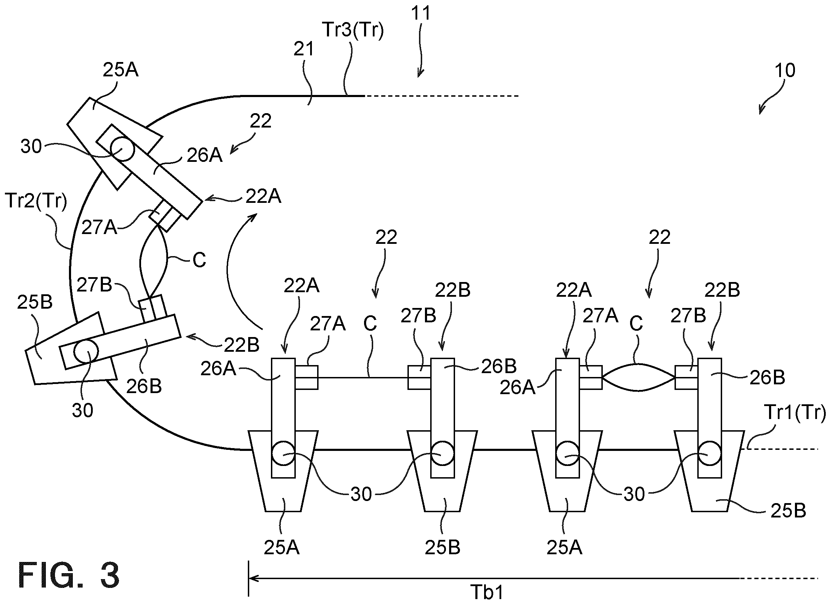

Fig. 2 is an enlarged plan view showing an example of the movement control of holding transfer units 22 (holding transfer sets 22A, 22B) in a case of an outward-directed curved track. Fig. 3 is an enlarged plan view showing an example of the movement control of holding transfer units 22 (holding transfer sets 22A, 22B) in a case of an inward-directed curved track.

In a case where the transfer track Tr includes a curved track, the orientation of the curved track is not limited. In the example shown in Figs. 1 and 2, in a curved track (see the second track Tr2), the direction from the base part (the carrier side end) to the tip part (the holding unit side end) of the arms 26A, 26B of each holding transfer unit 22 (hereinafter also referred to as an "arm direction") is directed away from the center of the circle of curvature of the curved track (i.e., the center of curvature) (in other words, is oriented in the outward direction). However, a curved track included in the transfer track Tr is not limited to such an outwardly directed curved track (i.e., an outward-directed curved track; see Figs. 1 and 2), and the transfer track Tr may include, for example, a curved track in which the arm direction is directed in an inward direction approaching the center of the circle of curvature (i.e., an inwardly-directed curved track; see Fig. 3). As described above, in an outward-directed curved track, the arms 26A, 26B of holding transfer sets 22A, 22B project from the carriers 25A, 25B in a direction away from the center of curvature, whereas in an inward-directed curved track, the arms 26A, 26B of holding transfer sets 22A, 22B project from the carriers 25A, 25B in a direction closer to the center of curvature.

In an example of an outward-directed curved track shown in Fig. 2, the control device 13 controls the movement of a first carrier 25A and a second carrier 25B, for example, in such a manner that, prior to the first carrier 25A and the second carrier 25B entering the curved second track Tr2 from the straight first track Tr1, the distance between the first holding unit 27A and the second holding unit 27B is narrowed in the first track Tr1 (e.g., in a first buffer track section Tb1).

In other words, the control device 13 controls the movement of the plurality of holding transfer sets 22A, 22B in such a manner that the distance between the arms 26A, 26B of the adjacent holding transfer sets 22A, 22B included in each holding transfer unit 22 in a section of the first track Tr1 immediately before the adjacent holding transfer sets 22A, 22B enter the second track Tr2 (i.e., in the first buffer track section Tb1) is smaller than the distance between the arms 26A, 26B of the adjacent holding transfer sets 22A, 22B immediately after the entire adjacent holding transfer sets 22A, 22B enter the second track Tr2.

As an example, the control device 13 controls the speed and/or the direction of movement of adjacent holding transfer sets 22A, 22B to adjust the spacing between the adjacent holding transfer sets 22A, 22B as the adjacent holding transfer sets 22A, 22B move from the first track Tr1 to the second track Tr2.

For example, the control device 13 may reduce the speed of a first carrier 25A moving ahead of a second carrier 25B in the first track Tr1 (e.g., in the first buffer track section Tb1 located just before the second track Tr2) in order to narrow the spacing between the first holding unit 27A and the second holding unit 27B. Alternatively, the control device 13 may increase the speed of a second carrier 25B moving after a first carrier 25A in the first track Tr1 in order to narrow the spacing between the first holding unit 27A and the second holding unit 27B. Alternatively, the control device 13 may move a first carrier 25A, which moves ahead of a second carrier 25B, toward the second carrier 25B (in other words, move the first carrier 25A upstream) in the first track in order to narrow the spacing between the first holding unit 27A and the second holding unit 27B.

By thus narrowing the distance between holding units 27A, 27B in the first track Tr1 prior to the holding transfer unit 22 entering the second track Tr2, proper retention of a bag C by the holding units 27A, 27B can be maintained even if the distance between the holding units 27A, 27B widens when the holding transfer unit 22 enters the second track Tr2 from the first track Tr1.

Thus, the interval between the first holding unit 27A and the second holding unit 27B in the first track Tr1 can be narrowed just before a holding transfer unit 22 (in particular, the preceding first holding transfer set 22A) enters the second track Tr2, but the timing at which the interval between the first holding unit 27A and the second holding unit 27B is narrowed is not limited. Specifically, the first buffer track section Tb1, where the interval between adjacent holding transfer sets 22A, 22B is adjusted, is set, in the present example, in, of the first track Tr1, a "section where processing by the processing device(s) is not performed" located downstream from the section where processing by the processing device(s) 12 (see Fig. 1) is performed, but may be set in "the section where processing by the processing device(s) is performed".

To suppress the effect of widening of the distance between holding units 27A, 27B caused by a change in orientation of the carriers 25A, 25B when the carriers 25A, 25B proceeds from the first track Tr1 to the second track Tr2, the distance between the first holding unit 27A and the second holding unit 27B is preferably narrowed in advance in the first track Tr1 by a distance equal to or greater than the widening amount of the distance between the holding units 27A, 27B.

Specifically, the control device 13 can control the movement of a first carrier 25A and a second carrier 25B in such a manner that the distance between the first holding unit 27A and the second holding unit 27B in the first track Tr1 (in the first buffer track section Tb1) is reduced from a first distance to a second distance. Here, "the first distance - the second distance" is preferably set to a value equal to or greater than the widening amount of the distance between the holding units 27A, 27B due to a change in orientation of the carriers 25A, 25B when the carriers 25A, 25B proceed from the first track Tr1 to the second track Tr2.

In this case, the control device 13 may control the movement of a first carrier 25A and a second carrier 25B in such a manner that while the first carrier 25A is moving along the second track Tr2 and the second carrier 25B is moving along the first track Tr1, the distance between the first holding unit 27A and the second holding unit 27B is equal to or greater than the second distance and equal to or less than the first distance. The control device 13 may also control the movement of a first carrier 25A and a second carrier 25B in such a manner that the distance between the first holding unit 27A and the second holding unit 27B is the first distance immediately after the second carrier 25B enters the second track Tr2 from the first track Tr1 following the first carrier 25A.

On the other hand, in an example of an inward-directed curved track shown in Fig. 3, the control device 13 controls the movement of a first carrier 25A and a second carrier 25B in such a manner that for example, the interval between the first holding unit 27A and the second holding unit 27B is widened in the first track Tr1 (e.g., in the first buffer track section Tb1) prior to the first carrier 25A and the second carrier 25B entering the curved second track Tr2 from the straight first track Tr1.

Specifically, the control device 13 controls the movement of the plurality of holding transfer sets 22A, 22B in such a manner that the distance between the arms 26A, 26B of the adjacent holding transfer sets 22A, 22B of each holding transfer unit 22 in an area of the first track Tr1 (in the first buffer track section Tb1) immediately before the adjacent holding transfer sets 22A, 22B enter the second track Tr2 is larger than the distance between the arms 26A, 26B of the adjacent holding transfer sets 22A, 22B immediately after the entire adjacent holding transfer sets 22A, 22B enter the second track Tr2.

Specifically, in the present example, the control device 13 also controls the speed and/or the direction of movement of adjacent holding transfer sets 22A, 22B to adjust the spacing between the adjacent holding transfer sets 22A, 22B as the adjacent holding transfer sets 22A, 22B move from the first track Tr1 to the second track Tr2.

For example, the control device 13 may increase the speed of a first carrier 25A, which is moving ahead of a second carrier 25B, in the first track Tr1 (e.g., in the first buffer track section Tb1 located just before the second track Tr2) to increase the spacing between the first holding unit 27A and the second holding unit 27B. Alternatively, the control device 13 may reduce the speed of a second carrier 25B, which is moving after a first carrier 25A, in the first track Tr1 to increase the spacing between the first holding unit 27A and the second holding unit 27B. Alternatively, the control device 13 may move a second carrier 25B, which moves following a first carrier 25A, away from the first carrier 25A (i.e., may move the second carrier 25B upstream) in the first track Tr1 to increase the distance between the first holding unit 27A and the second holding unit 27B.

By thus increasing the distance between holding units 27A, 27B in the first track Tr1 prior to the holding transfer unit 22 entering the second track Tr2, proper retention of a bag C by the holding units 27A, 27B can be maintained even if the distance between the holding units 27A, 27B narrows when the holding transfer unit 22 enters the second track Tr2 from the first track Tr1.

Thus, it is possible to widen the interval between a first holding unit 27A and a second holding unit 27B in the first track Tr1 just before the holding transfer unit 22 (in particular, the preceding first holding transfer set 22A) enters the second track Tr2, but the timing at which the interval between the first holding unit 27A and the second holding unit 27B is widened in the first track Tr1 is not limited. Specifically, the first buffer track section Tb1, where the interval between adjacent holding transfer sets 22A, 22B is adjusted, is set, in the present example, in, of the first track Tr1, a "section where processing by the processing device(s) is not performed" located downstream from the section where processing by the processing device(s) 12 (see Fig. 1) is performed, but may be set in "the section where processing by the processing device(s) is performed".

To suppress the effect of the narrowing of the distance between the holding units 27A, 27B caused by a change in orientation of carriers 25A, 25B as the carriers 25A, 25B progress from the first track Tr1 to the second track Tr2, the distance between the first holding unit 27A and the second holding unit 27B is preferably widened in advance in the first track Tr1 by a distance equal to or greater than the narrowing amount of the distance between the holding units 27A, 27B.

Specifically, the control device 13 can control the movement of a first carrier 25A and a second carrier 25B in such a manner that the distance between the first holding unit 27A and the second holding unit 27B is widened, in the first track Tr1, from the second distance to the first distance. Here, "the first distance - the second distance" is preferably set to a value equal to or greater than the narrowing amount of the distance between the holding units 27A, 27B due to a change in orientation of the carriers 25A, 25B when the carriers 25A, 25B proceed from the first track Tr1 to the second track Tr2.

In this case, the control device 13 may control the movement of a first carrier 25A and a second carrier 25B in such a manner that while the first carrier 25A is moving along the second track Tr2 and the second carrier 25B is moving along the first track Tr1, the distance between the first holding unit 27A and the second holding unit 27B is equal to or greater than the second distance and equal to or less than the first distance. The control device 13 may also control the movement of a first carrier 25A and a second carrier 25B in such a manner that the distance between the first holding unit 27A and the second holding unit 27B is the first distance immediately after the second carrier 25B enters the second track Tr2 from the first track Tr1 following the first carrier 25A.

Thus, in the examples shown in Figs. 2 and 3, the distance between the holding transfer sets 22A, 22B of each holding transfer unit 22 that holds a bag C is adjusted in the first transfer track section (in the first track Tr1), in particular, just before the second transfer track section (the second track Tr2). However, the control device 13 may control the movement of the plurality of holding transfer sets 22A, 22B so as to adjust the distance between holding transfer sets 22A, 22B while moving the holding transfer sets 22A, 22B from the first transfer track section to the second transfer track section.

For example, the control device 13 may control the movement of the plurality of holding transfer sets 22A, 22B to adjust the interval between the adjacent holding transfer sets 22A, 22B of each holding transfer unit 22 holding a bag C in such a manner that the distance between the holding units 27A, 27B of the adjacent holding transfer sets 22A, 22B is maintained constant as the adjacent holding transfer sets 22A, 22B move from the first track Tr1 to the second track Tr2.

Although the examples shown in Figs. 2 and 3 described above mainly relate to control for adjusting the spacing between the holding transfer sets 22A, 22B included in each holding transfer unit 22, the control device 13 also performs control for adjusting the spacing between the holding transfer sets 22A, 22B between adjacent holding transfer units 22.

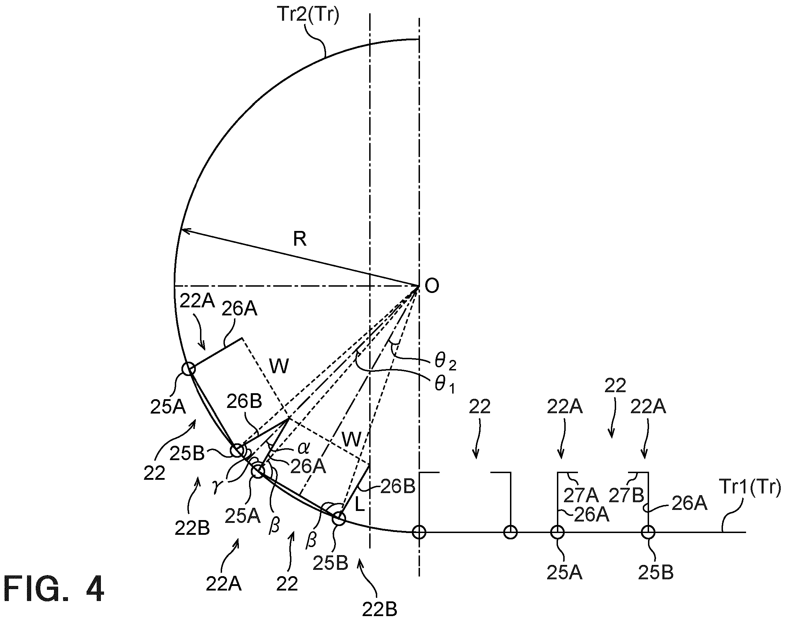

Below, referring to Fig. 4, an example of an interval adjustment control between the holding transfer sets 22A, 22B between adjacent holding transfer units 22 is described.

Fig. 4 is an enlarged plan view showing an example of the movement control of holding transfer units 22 (holding transfer sets 22A, 22B) in a case of an inward-directed curved track. In Fig. 4, each holding transfer unit 22 (carriers 25A, 25B, arms 26A, 26B and holding units 27A, 27B) is shown in simplified form, and indication of some elements (e.g., some holding units 27A, 27B) is omitted.

The example shown in Fig. 4, as in Figs. 2 and 3 described above, shows a case in which adjacent holding transfer units 22 proceed from a straight track (the first track Tr1: the first transfer track section) to a semicircular inward-directed curved track (the second track Tr2: the second transfer track section).

In the example shown in Fig. 4, the collision between adjacent holding transfer units 22 that may occur on the second track Tr2 usually occurs between the second holding transfer set 22B (in particular, the second arm 26B) of the preceding holding transfer unit 22 and the first holding transfer set 22A (in particular, the first arm 26A) of the following holding transfer unit 22.

Assume that a first holding transfer set 22A and a second holding transfer set 22B have the same size as each other and have symmetrical structures with respect to each other.

In this case, the actual length of the arms 26A, 26B is denoted by "L". Further, assuming that adjacent arms in the second track Tr2 (i.e., the second arm 26B of the second holding transfer set 22B of the preceding holding transfer unit 22 and the first arm 26A of the first holding transfer set 22A of the subsequent holding transfer unit 22) are simply in contact with each other without exerting any force substantially against each other, the ideal length of the arms 26A, 26B is denoted by "L‴".

Further, the interval between the first carrier 25A and the second carrier 25B of each holding transfer unit 22 (and thus, the interval between the first arm 26A and the second arm 26B of each holding transfer unit 22) is denoted by "W".

Further, the radius of curvature of the second track Tr2 is denoted by "R" and the center of the circle (the center of curvature) of the second track Tr2 is denoted by "O".

Further, the central angle formed by the second carrier 25B of the preceding holding transfer unit 22 (in particular, the location positioned on the transfer track Tr and connected to the second arm 26B) of adjacent holding transfer units 22, the first carrier 25A of the following holding transfer unit 22 (in particular, the location positioned on the transfer track Tr and connected to the first arm 26A) of the adjacent holding transfer units 22, and the center of curvature O is represented by "$2 \times \theta_1$". Further, the central angle formed by the first carrier 25A (in particular, the location positioned on the transfer track Tr and connected to the first arm 26A) and the second carrier 25B (in particular, the location positioned on the transfer track Tr and connected to the second arm 26B) of each holding transfer unit 22, and the center of curvature O is represented by "$2 \times \theta_2$".

Further, the angle of circumference formed by a straight line passing through the first carrier 25A (in particular, the location positioned on the transfer track Tr and connected to the first arm 26A) and the second carrier 25B (in particular, the location positioned on the transfer track Tr and connected to the second arm 26B) and a straight line passing through each carrier 25A, 25B (in particular, the location positioned on the transfer track Tr and connected to an arm 26A, 26B) and the center of curvature O, with respect to the second track Tr2, is represented by "$\beta$".

Further, the internal angles of a triangle of which the vertices are formed respectively by the second carrier 25B (in particular, the location positioned on the transfer track Tr and connected to the second arm 26B) of the preceding holding transfer unit 22 of adjacent holding transfer units 22, the first carrier 25A (in particular, the location positioned on the transfer track Tr and connected to the first arm 26A) of the subsequent holding transfer unit 22 of the adjacent holding transfer units 22, and the point where the second arm 26B and the first arm 26A contact each other, are represented by "$\gamma$", "$\gamma$" and "$2 \times a$". Specifically, the interior angles corresponding to the second carrier 25B of the preceding holding transfer unit 22 and the first carrier 25A of the subsequent holding transfer unit 22 respectively are denoted by "$\gamma$", and the interior

angle corresponding to the point where the second arm 26B and the first arm 26A contact each other is denoted by "2 × a".

In the example shown in Fig. 4 described above, the following relationships are satisfied.

$$2\beta + 2\theta_2 = 180°$$

$$\beta = 90° - \theta_2 \quad \text{(Formula 1)}$$

In the example shown in Fig. 4 described above, the following relationships are also satisfied.

$$2\gamma + 2a = 180°$$

$$\gamma = 90° - a \quad \text{(Formula 2)}$$

In the example shown in Fig. 4 described above, the following relationships are also satisfied.

$$\{(90° - \beta) + \gamma\} \times 2 + 2\theta_1 = 180°$$

$$90° - \beta + \gamma + \theta_1 = 90°$$

$$\beta = \gamma + \theta_1 \quad \text{(Formula 3)}$$

Then, based on Formula 2 and Formula 3 above, the following relationships are satisfied.

$$\beta = 90° - a + \theta_1$$

$$a = 90° - \beta + \theta_1 \quad \text{(Formula 4)}$$

Then, based on Formula 1 and Formula 4 above, the following relationships are satisfied.

$$a = 90° - (90° - \theta_2) + \theta_1$$

$$a = \theta_1 + \theta_2 \quad \text{(Formula 5)}$$

On the other hand, as is clear from Fig. 4, the following relationships are satisfied.

$$L' \sin a = R \sin \theta_1$$

$$L' = (\sin \theta_1 / \sin a)R \quad \text{(Formula 6)}$$

$$\sin \theta_2 = (W / 2) / R$$

$$\sin \theta_2 = W / 2R \quad \text{(Formula 7)}$$

Then, based on Formula 5 and Formula 6 above, the following relationship is satisfied.

$$L' = (\sin \theta_1 / \sin (\theta_1 + \theta_2))R \quad \text{(Formula 8)}$$

When the actual length L of the arms 26A, 26B is shorter than the ideal length L' of the arms 26A, 26B expressed by the above Formula 8, collision of the arms 26A, 26B between adjacent holding transfer units 22 can be effectively avoided. In other words, when the following relational expressions are satisfied, collision of the arms 26A, 26B between adjacent holding transfer units 22 can be effectively avoided.

$$L < L'$$

- $L < (\sin \theta_1 / \sin (\theta_1 + \theta_2))R$

- $(L / R) < \{\sin \theta_1 / \sin (\theta_1 + \theta_2)\}$  (Formula 9)

Then, based on Formula 7 and Formula 9 above, the following relationship is satisfied.

- $(L / R) < \{\sin \theta_1 / \sin (\theta_1 + \sin^{-1} (W / 2R))\}$  (Formula 10)

The control device 13 can control the movement of the plurality of holding transfer units 22 (in particular, adjacent holding transfer units 22 (a first holding transfer set 22A and a second holding transfer set 22B)) traveling on the transfer track Tr in such a manner that the above Formulae are satisfied in such a manner that collisions of holding transfer sets 22A, 22B can be effectively avoided.

In the example shown in Fig. 4 above, the arms 26A, 26B of each of a plurality of holding transfer sets 22A, 22B protrude from the carriers 25A, 25B in directions approaching the center of the curvature circle (the center of curvature O) of the second track Tr2 while moving along the second track Tr2. However, the above description based on Fig. 4 may be applied to other cases as well. For example, when a plurality of holding transfer sets 22A, 22B move along an outward-directed curved track, the arms 26A, 26B may extend out from the carriers 25A, 25B not only in directions away from the center of curvature O of the curved track (see the second track Tr2), but also in directions closer to the center of curvature O. In this case, in order to avoid collision (interference) between the "portions of arms 26A, 26B protruding from the carriers 25A, 25B in directions approaching the center of curvature O", the above Formulae explained based on Fig. 4 above can be applied to the "portions protruding from carriers 25A, 25B in directions approaching the center of curvature O".

[Transfer track]

The transfer track Tr along which a holding transfer unit 22 moves is not limited to the examples shown in Figs. 1-4 described above.

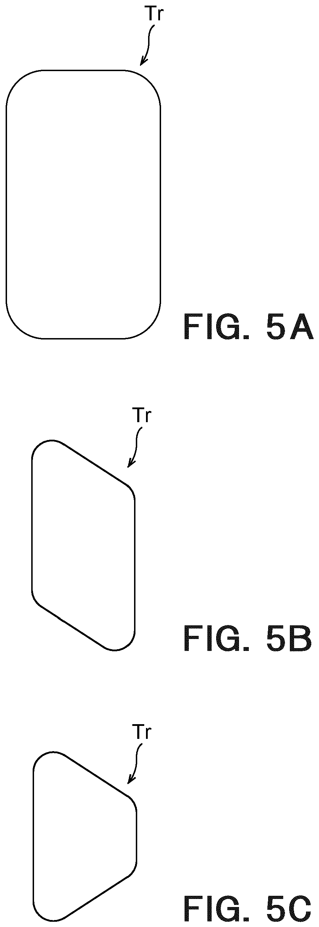

Figs. 5A through 5I are plan views showing typical examples of the transfer track Tr.

The transfer track Tr shown in Fig. 5A has a planar shape configured as a curved track of a quadrilateral (rectangle) having rounded corners. The transfer track Tr shown in Fig. 5B has a planar shape configured as a curved track of a parallelogram having rounded corners. The transfer track Tr shown in Fig. 5C has a planar shape configured as a curved track of a trapezoid having rounded corners.

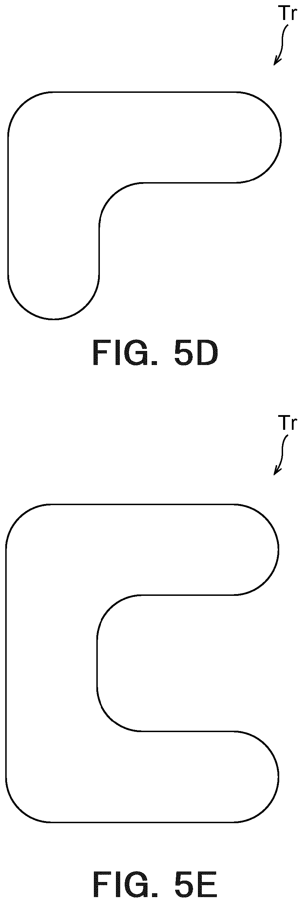

The transfer track Tr shown in Fig. 5D is an endless track that has a generally L-shape as a whole, and has a planar shape configured as a curved track with rounded corners and rounded ends. The transfer track Tr shown in Fig. 5E is an endless track having a generally C-shape as a whole, and has a planar shape configured as a curved track with rounded corners and rounded ends.

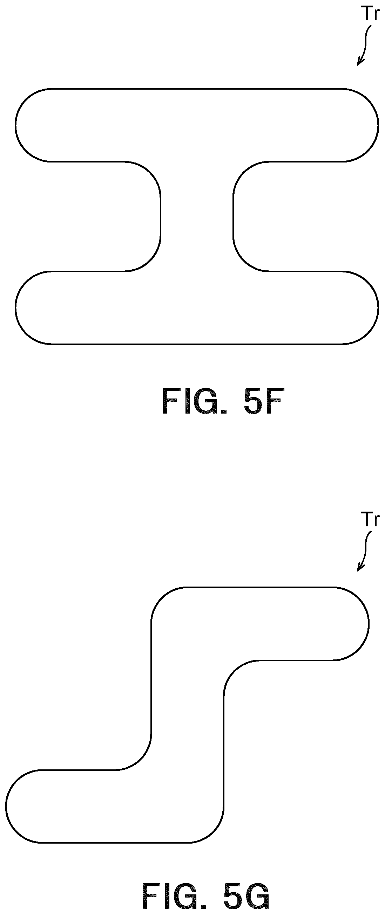

The transfer track Tr shown in Fig. 5F is an endless track having a generally serifed I-shape as a whole, and has a planar shape configured as a curved track with rounded corners and rounded ends. The transfer track Tr shown in Fig. 5G is an endless track having a generally S-shape as a whole, and has a planar shape configured as a curved track with rounded corners and rounded ends.

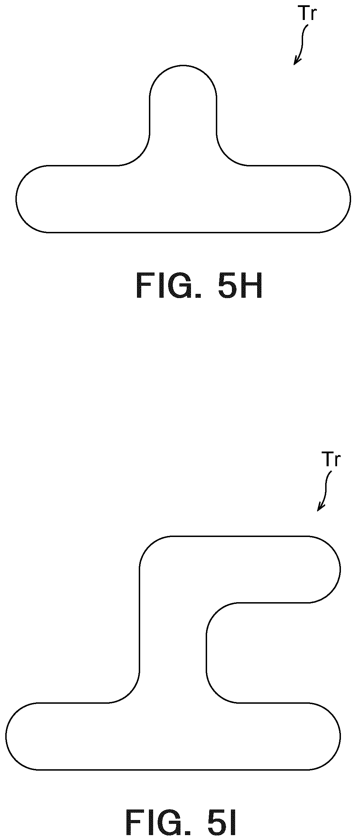

The transfer track Tr shown in Fig. 5H is an endless track having a generally inverted T-shape as a whole, and has a planar shape configured as a curved track with rounded corners and rounded ends. The transfer track Tr shown in Fig. 5I is an endless track having a shape based on an overlap between the transfer track Tr shown in Fig. 5G and the transfer track Tr shown in Fig. 5H.

The transfer tracks Tr shown in Figs. 5A through 5I respectively all include a straight track and a curved track connected to the straight track. In particular, in the transfer tracks Tr shown in Figs. 5A through 5C, all of the curved tracks have curvature of a common polarity (specifically, have only one of "positive curvature" and "negative curvature"). On the other hand, the transfer tracks Tr shown in Figs. 5D through 5I include one or more curved tracks with positive curvature and one or more curved tracks with negative curvature. Therefore, the transfer track Tr shown in each of Figs. 5A through 5C is configured as a track that includes only one of an outward-directed curved track type and an inward-directed curved track type. On the other hand, the transfer track Tr shown in each of Figs. 5D through 5I is configured as a track that includes both an outward-directed curved track type and an inward-directed curved track type.

As mentioned above, whether a curved track is classified as an outward-directed curved track or an inward-directed curved track is determined based not only on the polarity (sign) of the curvature of the track, but also on the arm direction of the holding transfer sets 22A, 22B of each holding transfer unit 22. Therefore, depending on the arm direction of the holding transfer set 22A, 22B of each holding transfer unit 22, the curved tracks included in the transfer tracks Tr shown in Figs. 5A through 5C can be configured as outward-directed curved tracks and also can be configured as inward-directed curved tracks.

s explained above, according to the container processing system 10 (including the container transfer device 11) and the container processing method (including the container transfer method) described above, when adjacent holding transfer sets 22A, 22B move from a first transfer track section (e.g., the first track Tr1) to a second transfer track section (e.g., the second track Tr2), the movement of the adjacent holding transfer sets 22A, 22B is controlled based on the size of a bag C and the curvature of the second transfer track section to adjust the interval between the adjacent holding transfer sets 22A, 22B. Therefore, when a plurality of holding transfer sets 22A, 22B are moved along a common transfer track Tr, unintended spacing variation between adjacent holding transfer sets 22A, 22B can be suppressed.

Further, according to the container transfer devices 11 shown in Figs. 1 through 4 described above, each holding transfer unit 22 includes a first holding transfer set 22A and a second holding transfer set 22B that can be moved and driven independently of each other.

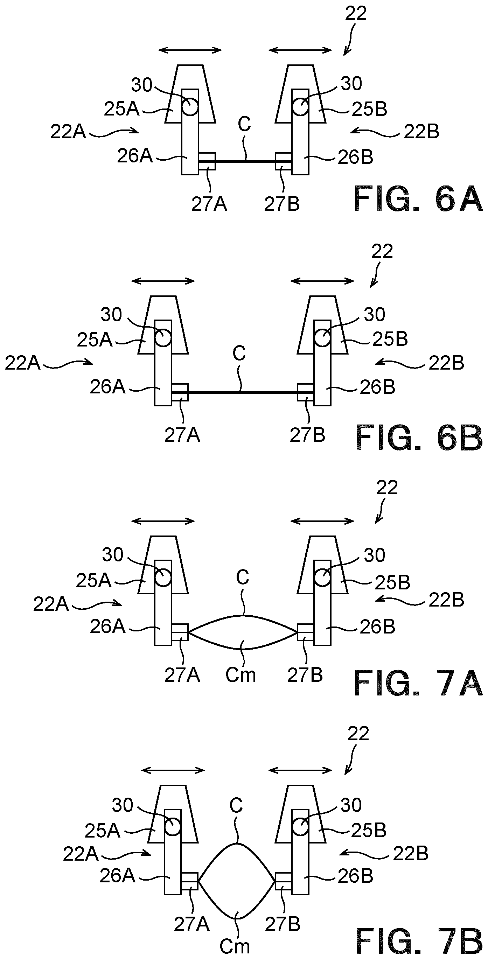

Consequently, the interval of the first holding transfer set 22A and the second holding transfer set 22B (in particular, the interval of the first holding unit 27A and the second holding unit 27B) can be adjusted under the control of the control device 13 in an adaptively manner (see Figs. 6A and 6B) in such a manner that various bags C of different bag widths (including, for example, irregularly shaped bags having a non-rectangular planar shape) can be properly held by each holding transfer unit 22.

Further, the interval between a first holding transfer set 22A and a second holding transfer set 22B (in particular, the interval between the first holding unit 27A and the second holding unit 27B) can be adaptively adjusted under the control of the control device 13 in such a manner that the degree of deflection of a bag C held by each holding transfer unit 22 can be changed (for instance, in such a manner that the degree of opening of the mouth portion Cm of the bag C can be optimized depending on the processing contents and other circumstances) (see Figs. 7A and 7B).

In the examples shown in Figs. 1 through 4 described above, each holding transfer unit 22 includes two holding transfer sets 22A, 22B, but each holding transfer unit 22 may include only one holding transfer set, or may include three or more holding transfer sets.

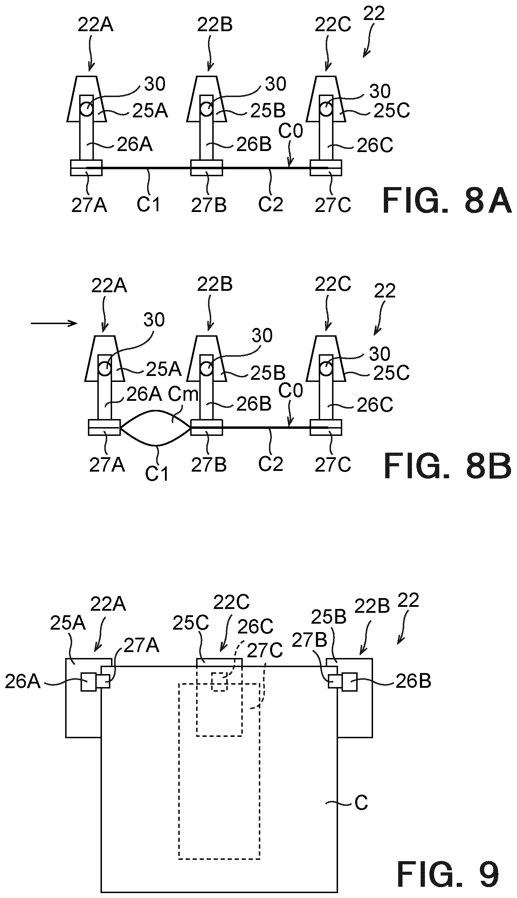

For example, as shown in Figs. 8A and 8B, each holding transfer unit 22 may include three holding transfer sets 22a, 22b, 22c to be able to hold a connected bag body C0 containing two (a plurality of) integrally connected bags C1, C2. In this case, both sides of the first bag C1 can be held by the first holding transfer set 22A (the first holding unit 27A) and the second holding transfer set 22B (the second holding unit 27B), while both sides of the second bag C2 can be held by the second holding transfer set 22B (the second holding unit 27B) and the third holding transfer set 22C (the third holding unit 27C). Then, by adjusting the interval between the first holding transfer set 22A (the first holding unit 27A) and the second holding transfer set 22B (the second holding unit 27B), the state of tension and the state of flexure of the first bag C1 (for example, the opening degree of the mouth portion Cm) can be controlled. Similarly, by adjusting the interval between the second holding transfer set 22B (the second holding unit 27B) and the third holding transfer set 22C (the third holding unit 27C), the state of tension and the state of flexure of the second bag C2 can be controlled.

In particular, by adjusting the relative position of the first holding transfer set 22A (the first holding unit 27A) with respect to the second holding transfer set 22B (the second holding unit 27B) while maintaining the relative position between the second holding transfer set 22B (the second holding unit 27B) and the third holding transfer set 22C (the third holding unit 27C), the state of the first bag C1 can be changed while the state of the second bag C2 can be basically unchanged and maintained. Similarly, by adjusting the relative position of the third holding transfer set 22C (the third holding unit 27C) with respect to the second holding transfer set 22B (the second holding unit 27B) while maintaining the relative position between the first holding transfer set 22A (the first holding unit 27A) and the second holding transfer set 22B (the second holding unit 27B), the state of the second bag C2 can be changed while the state of the first bag C1 can be basically unchanged and maintained.

Further, in the examples shown in Figs. 1 through 4 described above, each of the two holding transfer sets 22A, 22B of each holding transfer unit 22 has a holding unit 27A, 27B provided as a gripping unit, but holding transfer sets may be provided that support bags C by using holding means other than gripping.

For example, as shown in Fig. 9, in addition to the first holding transfer set 22A and the second holding transfer set 22B having holding units 27A, 27B provided as gripping units, a third holding transfer set 22C having a third holding unit (e.g., a receiving plate) 27C that contacts the front surface section or the back surface section extending between both sides of a bag C. The third holding unit 27C is fixedly attached via a third arm 26C to a third carrier 25C that is moved along the transfer track Tr by the transfer device 21 under the control of the control device 13. Then, the third holding unit 27C may be pressed against a bag C to tension the printing surface of the bag C when the bag C undergoes a printing process, may be pressed against a bag C to tension the inspection surface of the bag C when the bag C undergoes an inspection process, or may be pressed against a bag C during a forming process or any other process.

[Variant examples]

In the examples shown in Figs. 2 and 3 described above, a buffer track section (the first buffer track section Tb1) is provided in the first transfer track section (in particular, in the area immediately before the second transfer track section), which is positioned upstream, among the first transfer track section (the first track Tr1) and the second transfer track section (the second track Tr2) having different curvatures from each other, and in the buffer track section, the speed of one of adjacent holding transfer sets 22A, 22B can be made to be different from the speed of the other. Such a buffer track section may be provided in the second transfer track section (in particular, in the area immediately after the first transfer track section; see the second buffer track section Tb2 in Fig. 1), which is positioned downstream.

Further, in the examples shown in Figs. 2 through 4 described above, mainly when adjacent holding transfer sets 22A, 22B move from the first track Tr1 to the second track Tr2, the interval between the adjacent holding transfer sets 22A, 22B is adjusted. However, the control device 13 may control the movement of adjacent holding transfer sets 22A, 22B to adjust the interval between the adjacent holding transfer sets 22A, 22B for any other tracks where the curvature varies. For example, the control device 13 may control the movement of adjacent holding transfer sets 22A, 22B in such a manner that the interval between the adjacent holding transfer sets 22A, 22B that is moving along "the second track Tr2 and the third track Tr3", "the third track Tr3 and the fourth track Tr4" and/or "the fourth track Tr4 and the first track Tr1" of the transfer track Tr shown in Fig. 1 is adjusted.

Further, any other container may be used instead of a bag C, and each holding transfer unit 22 (in particular, holding units 27A, 27B) may be provided to be able to support a container other than a bag (e.g., a bottle). Further, each holding transfer unit 22 may be capable of supporting and conveying "objects used in container processing" other than containers (e.g., workpieces such as spouts). For example, when each holding transfer unit 22 transfers a bottle while supporting the bottle, a holding transfer unit 22 can cause the bottle (e.g., a horizontally protruding portion) to be hooked onto the holding units 27A, 27B to support the bottle in a suspended state. In this case, the bottle can be supported or released by the holding transfer unit 22 by moving at least one of the holding units 27A, 27B along the transfer track Tr to widens or narrow the interval between the holding units 27A, 27B. Also, by rotating at least one of the holding units 27A, 27B so as to change the direction of at least one of the holding units 27A, 27B to widen or narrow the interval between the holding units 27A, 27B at least in part (for example, by arranging the holding units 27A, 27B in a V-shape and in an inverse V-shape), the bottle can be supported or released by the holding transfer unit 22. Thus, according to the holding transfer unit 22 described above, a bottle can be supported and released simply by adjusting the interval between the holding units 27A, 27B, which promotes faster processing.

It should be noted that the embodiments and the variant examples disclosed in this specification are in all respects illustrative only and are not to be construed as limiting. The above-described embodiments and variant examples may undergo omission, substitution and modification in various forms without departing from the scope and the gist of the appended claims. For example, the above embodiments and variant examples may be combined in whole or in part, and embodiments other than those described above may be combined with the above embodiments or variant examples. In addition, the effects of the present disclosure described in this specification are illustrative only, and other effects may be brought about.

The technical categories in which the above-described technical ideas are embodied are not limited. For example, the technical ideas described above may be embodied by a computer program for causing a computer to execute one or more procedures (steps) included in a method of manufacturing or using the devices described above. Further, the above-described technical ideas may also be embodied by a computer-readable non-transitory recording medium on which such a computer program is recorded.

[Additional notes]

The present disclosure technology can be embodied as in the following aspects.

[Aspect 1]

A container processing apparatus comprising:

a plurality of holding transfer sets that move along a transfer track and transfer an object used for container processing; and
a control unit that controls movement of the plurality of holding transfer sets, wherein:
the transfer track includes a first transfer track section and a second transfer track section that is connected to the first transfer track section and has a curvature different from a curvature of the first transfer track section, and
the control unit controls movement of adjacent holding transfer sets in such a manner that an interval between the adjacent holding transfer sets is adjusted according to size of the object and the curvature of the second transfer track section when the adjacent holding transfer sets move from the first transfer track section to the second transfer track section.

[Aspect 2]

The container processing apparatus as defined in Aspect 1, wherein:
each of the plurality of holding transfer sets includes a carrier, an arm protruding from the carrier, and a holding unit that is attached to the arm and is capable of holding the object, and
the control unit adjusts the interval between the adjacent holding transfer sets in such a manner that the arms do not collide with each other between the adjacent holding transfer sets when the adjacent holding transfer sets move from the first transfer track section to the second transfer track section.

[Aspect 3]

The container processing apparatus as defined in Aspect 2, wherein the arm of each of the plurality of holding transfer sets protrude from the carrier in a direction approaching a center of a curvature circle of the second transfer track section while moving through the second transfer track section.

[Aspect 4]

The container processing apparatus as defined in Aspect 3, wherein the control unit controls the movement of the plurality of holding transfer sets in such a manner that distance between the arms of the adjacent holding transfer sets in the first transfer track section immediately before the adjacent holding transfer sets enter the second transfer track section is greater than distance between the arms of the adjacent holding transfer sets immediately after the entire adjacent holding transfer sets enter the second transfer track section.

[Aspect 5]

The container processing apparatus as defined in any one of Aspects 1 to 4, wherein:
each of the plurality of holding transfer sets includes a carrier, an arm protruding from the carrier, and a holding unit that is attached to the arm and is capable of holding the object, and
the control unit controls the movement of the plurality of holding transfer sets in such a manner that distance between the holding units of the adjacent holding transfer sets is maintained constant when the adjacent holding transfer sets that hold the object move from the first transfer track section to the second transfer track section.

[Aspect 6]

The container processing apparatus as defined in any one of Aspects 1 to 5, wherein the control unit controls speed of the movement of the adjacent holding transfer sets to adjust the interval between the adjacent holding transfer sets when the adjacent holding transfer sets move from the first transfer track section to the second transfer track section.

[Aspect 7]

The container processing apparatus as defined in any one of Aspects 1 to 6, wherein at least one of an area of the first transfer track section immediately before the second transfer track section and an area of the second transfer track section immediately after the first transfer track section is a buffer track section where speed of movement of one of the adjacent holding transfer sets is different from speed of movement of another of the adjacent holding transfer sets.

[Aspect 8]

A container processing method comprising a step of causing a plurality of holding transfer sets that transfer an object used for container processing, to move along a transfer track, wherein:
the transfer track includes a first transfer track section and a second transfer track section that is connected to the first transfer track section and has a curvature different from a curvature of the first transfer track section, and
when adjacent holding transfer sets move from the first transfer track section to the second transfer track section, an interval between the adjacent holding transfer sets is adjusted according to size of the object and the curvature of the second transfer track section.

**Claims**

1. A container processing apparatus comprising:

a plurality of holding transfer sets that move along a transfer track and transfer an object used for container processing; and
a control unit that controls movement of the plurality of holding transfer sets, wherein:
the transfer track includes a first transfer track section and a second transfer track section that is connected to the first transfer track section and has a curvature different from a curvature of the first transfer track section, and
the control unit controls movement of adjacent holding transfer sets in such a manner that an interval between the adjacent holding transfer sets is adjusted according to size of the object and the curvature of the second transfer track section when the adjacent holding transfer sets move from the first transfer track section to the second transfer track section.

2. The container processing apparatus as defined in claim 1, wherein:
each of the plurality of holding transfer sets includes a carrier, an arm protruding from the carrier, and a holding unit that is attached to the arm and is capable of holding the object, and
the control unit adjusts the interval between the adjacent holding transfer sets in such a manner that the arms do not collide with each other between the adjacent holding transfer sets when the adjacent holding transfer sets move from the first transfer track section to the second transfer track section.

3. The container processing apparatus as defined in claim 2, wherein the arm of each of the plurality of holding transfer sets protrude from the carrier in a direction approaching a center of a curvature circle of the second transfer track section while moving through the second transfer track section.

4. The container processing apparatus as defined in claim 3, wherein the control unit controls the movement of the plurality of holding transfer sets in such a manner that distance between the arms of the adjacent holding transfer sets in the first transfer track section immediately before the adjacent holding transfer sets enter the second transfer track section is greater than distance between the arms of the adjacent holding transfer sets immediately after the entire adjacent holding transfer sets enter the second transfer track section.

5. The container processing apparatus as defined in any one of claims 1 to 4, wherein:
each of the plurality of holding transfer sets includes a carrier, an arm protruding from the carrier, and a holding unit that is attached to the arm and is capable of holding the object, and
the control unit controls the movement of the plurality of holding transfer sets in such a manner that distance between the holding units of the adjacent holding transfer sets is maintained constant when the adjacent holding transfer sets that hold the object move from the first transfer track section to the second transfer track section.

6. The container processing apparatus as defined in any one of claims 1 to 5, wherein the control unit controls speed of the movement of the adjacent holding transfer sets to adjust the interval between the adjacent holding transfer sets when the adjacent holding transfer sets move from the first transfer track section to the second transfer track section.

7. The container processing apparatus as defined in any one of claims 1 to 6, wherein at least one of an area of the first transfer track section immediately before the second transfer track section and an area of the second transfer track section immediately after the first transfer track section is a buffer track section where speed of movement of one of the adjacent holding transfer sets is different from speed of movement of another of the adjacent holding transfer sets.

8. A container processing method comprising the step of causing a plurality of holding transfer sets that transfer an object used for container processing, to move along a transfer track, wherein:
the transfer track includes a first transfer track section and a second transfer track section that is connected to the first transfer track section and has a curvature different from a curvature of the first transfer track section, and
when adjacent holding transfer sets move from the first transfer track section to the second transfer track section, an interval between the adjacent holding transfer sets is adjusted according to size of the object and the curvature of the second transfer track section.

FIG. 1

FIG. 2

FIG. 3

FIG. 4

Tr

FIG. 5A

Tr

FIG. 5B

Tr

FIG. 5C

Tr

FIG. 5D

Tr

FIG. 5E

FIG. 5F

FIG. 5G

Tr

FIG. 5H

Tr

FIG. 5I

FIG. 6A

FIG. 6B

FIG. 7A

FIG. 7B

22A　　　　22B　　　　22C　22

30　　25A　　30　　25B　　30　25C

26A　　26B　C0　26C

27A　C1　27B　C2　27C

## FIG. 8A

22A　　　　22B　　　　22C　22

30　　25A　　30　　25B　　30　25C

26A Cm　26B　C0　26C

27A　C1　27B　C2　27C

## FIG. 8B

25A　22A　25C　22C　26C　25B　22B　22

26A　27A　27C　27B　26B

C

## FIG. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/176659 A1 (AUMANN THOMAS [DE] ET AL) 23 June 2016 (2016-06-23) | 1-6,8 | INV.<br>B65G37/00 |
| Y | * paragraph [0004]; figures 1-3 * | 7 | B65G47/90 |
| | * paragraph [0007] * | | B65G54/02 |
| | * paragraph [0014] * | | |
| | * paragraph [0016] * | | ADD. |
| | * paragraph [0029] * | | B65B43/46 |
| | * paragraph [0033] * | | B65B43/52 |
| | * paragraph [0036] * | | |
| | ----- | | |
| Y | US 2017/050332 A1 (BAUER SIGFRID [DE] ET AL) 23 February 2017 (2017-02-23) | 7 | |
| A | * paragraph [0067]; figure 13 * | 1-6,8 | |
| | * paragraph [0069] - paragraph [0070] * | | |
| | ----- | | |
| A,D | JP 2018 172140 A (MITSUBISHI HEAVY IND MACH SYSTEMS LTD) 8 November 2018 (2018-11-08) * the whole document * | 1-8 | |
| | ----- | | |

**TECHNICAL FIELDS SEARCHED (IPC)**

B65G
B65B

The present search report has been drawn up for all claims

| Place of search | Date of completion of the search | Examiner |
|---|---|---|
| The Hague | 10 June 2025 | Akgül, Adnan Erhan |

EPO FORM 1503 03.82 (P04C01)

## ANNEX TO THE EUROPEAN SEARCH REPORT
## ON EUROPEAN PATENT APPLICATION NO.

EP 25 15 4621

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| US 2016176659 A1 | 23-06-2016 | CN 105712047 A | 29-06-2016 |
| | | EP 3034441 A1 | 22-06-2016 |
| | | US 2016176659 A1 | 23-06-2016 |
| US 2017050332 A1 | 23-02-2017 | CN 106455591 A | 22-02-2017 |
| | | DE 102014106400 A1 | 12-11-2015 |
| | | EP 3126186 A1 | 08-02-2017 |
| | | US 2017050332 A1 | 23-02-2017 |
| | | WO 2015162182 A1 | 29-10-2015 |
| JP 2018172140 A | 08-11-2018 | JP 6892307 B2 | 23-06-2021 |
| | | JP 2018172140 A | 08-11-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018172140 A